(19)

Europäisches
Patentamt
European
Patent Office
Office européen
des brevets

(11) **EP 2 582 135 A2**

(12) **EUROPEAN PATENT APPLICATION**
published in accordance with Art. 153(4) EPC

(43) Date of publication:
**17.04.2013 Bulletin 2013/16**

(51) Int Cl.:
***H04N 7/26*** *(2006.01)*

(21) Application number: **11792615.4**

(22) Date of filing: **22.04.2011**

(86) International application number:
**PCT/KR2011/002906**

(87) International publication number:
**WO 2011/155704 (15.12.2011 Gazette 2011/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2010  KR 20100077249
11.06.2010  US 353821 P**

(71) Applicants:
• **Samsung Electronics Co., Ltd
Gyeonggi-do 443-742 (KR)**
• **University Of Southern California
Los Angeles, CA 90089-2561 (US)**

(72) Inventors:
• **ANTONIO, Ortega
Los Angeles, CA 90089-2561 (US)**
• **KIM, Woo Shik
Los Angeles, CA 90089-2561 (US)**
• **LEE, Seok
Yongin-si, Gyeonggi-do 449-712 (KR)**
• **LEE, Jae Joon
Yongin-si, Gyeonggi-do 449-712 (KR)**
• **WEY, Ho Cheon
Yongin-si, Gyeonggi-do 449-712 (KR)**
• **LEE, Seung Sin
Yongin-si, Gyeonggi-do 449-712 (KR)**

(74) Representative: **Land, Addick Adrianus Gosling et
al
Arnold & Siedsma
Sweelinckplein 1
2517 GK Den Haag (NL)**

(54) **3D VIDEO ENCODING/DECODING APPARATUS AND 3D VIDEO ENCODING/DECODING
METHOD USING DEPTH TRANSITION DATA**

(57)      Provided is a method and apparatus for encoding and decoding a three-dimensional (3D) video based on depth transition data. The 3D video encoding apparatus and method may calculate a depth transition for each pixel position according to a view change, may quantize a position of the calculated depth transition, and may encode the quantized position of the depth transition.

FIG. 4

**Description**

CROSS-REFERENCE TO RELATED APPLICATION

This application claims the benefit of US Provisional Application No. 61/353,821, filed June 11, 2010, and Korean Patent Application No. 10-2010-0077249, filed on August 11, 2010 in the Korean Intellectual Property Office, the disclosure of which is incorporated herein by reference.

BACKGROUND

1. Field

Example embodiments relate to an apparatus and method for encoding and decoding a three-dimensional (3D) video based on depth transition data.

2. Description of the Related Art

A three-dimensional (3D) video system may effectively perform 3D video encoding using a depth image based rendering (DIBR) system.

However, a conventional DIBR system may generate distortions in rendered images and the distortions may degrade the quality of a video system. Specifically, a distortion of a compressed depth image may lead to erosion artifacts in object boundaries. Due to the erosion artifacts, a screen quality may be degraded.

SUMMARY

The foregoing and/or other aspects are achieved by providing an apparatus for encoding a three-dimensional (3D) video, including: a transition position calculator to calculate a depth transition for each pixel position according to a view change; a quantizer to quantize a position of the calculated depth transition; and an encoder to encode the quantized position of the depth transition.

The transition position calculator may calculate depth transition data based on a view transition position where a foreground-to-background transition or a background-to-foreground transition occurs.

The transition position calculator may calculate depth transition data based on pixel positions where a foreground-to-background transition or a background-to-foreground transition occurs between neighboring reference views.

The 3D video encoding apparatus may further include a foreground and background separator to separate a foreground and a background based on depth values of foreground objects and background objects in a reference video.

The foreground and background separator may separate the foreground and the background based on a global motion of the background objects and a local motion of the foreground objects in the reference video.

The foreground and background separator may separate the foreground and the background based on an edge structure in the reference video.

The transition position calculator may calculate depth transition data by measuring a transition distance from a given pixel position to a pixel position where a foreground-to-background transition or a background-to- foreground transition occurs.

The transition position calculator may calculate depth transition data based on intrinsic camera parameters or extrinsic camera parameters.

The quantizer may perform quantization based on a rendering precision of a 3D video decoding system.

The foregoing and/or other aspects are achieved by providing an apparatus for decoding a three-dimensional (3D) video, including: a decoder to decode quantized depth transition data; an inverse quantizer to perform inverse-quantization of the depth transition data; and a distortion corrector to correct a distortion with respect to a synthesized image based on the decoded depth transition data.

The decoder may perform entropy decoding for a pixel position where a foreground-to-background transition or a background-to-foreground transition occurs.

The 3D video decoding apparatus may further include a foreground and background separator to separate a foreground and a background based on depth values of foreground objects and background objects in a reference video.

The distortion corrector may correct a distortion by detecting pixels with the distortion greater than a reference value based on the depth transition data.

The 3D video decoding apparatus may further include a foreground area detector to calculate local averages of a foreground area and a background area based on a foreground and background map generated from the depth transition data, and to detect a pixel value through a comparison between the calculated local averages.

The distortion corrector may replace the detected pixel value with the local average of the foreground area or the background including a corresponding pixel based on the depth transition data.

The distortion corrector may replace the detected pixel value with a nearest pixel value belonging to the same foreground area or to the background area based on the depth transition data.

The foregoing and/or other aspects are achieved by providing a method of encoding a three-dimensional (3D) video, including: calculating a depth transition for each pixel position according to a view change; quantizing a position of the calculated depth transition; and encoding the quantized position of the depth transition.

The calculating may include calculating depth transition data based on a view transition position where a foreground-to-background transition or a background-to-foreground transition occurs.

EFFECT

The foregoing and/or other aspects are achieved by providing a method of decoding a three-dimensional (3D) video, including: decoding quantized depth transition data; performing inverse quantization of the depth transition data; and enhancing a quality of an image generated based on the decoded depth transition data.

The decoding may include performing entropy decoding for a pixel position where a foreground-to-background transition or a background-to-foreground transition occurs.

Additional aspects of embodiments will be set forth in part in the description which follows and, in part, will be apparent from the description, or may be learned by practice of the disclosure.

BRIEF DESCRIPTION OF THE DRAWINGS

These and/or other aspects will become apparent and more readily appreciated from the following description of embodiments, taken in conjunction with the accompanying drawings of which:

FIG. 1 illustrates coordinates based on each view of a cube object;
FIG. 2 illustrates depth transition data using the cube object of FIG. 1;
FIG. 3 illustrates depth transition data indicating a foreground-to-background transition;
FIG. 4 illustrates a configuration of a three-dimensional (3D) video encoder using depth transition data according to example embodiments;
FIG. 5 illustrates a configuration of a 3D video decoder using depth transition data according to example embodiments;
FIG. 6 illustrates a method of encoding a 3D video based on depth transition data according to example embodiments;
FIG. 7 illustrates a method of decoding a 3D video based on depth transition data according to example embodiments;
FIG. 8 illustrates a distortion correction procedure using depth transition data according to example embodiments;
FIG. 9 illustrates a graph showing an example of a distortion rate curve comparing a depth transition data scheme according to example embodiments and a conventional encoding scheme; and
FIG. 10 illustrates a graph showing an example of a quality comparison between a depth transition data scheme according to example embodiments and a conventional encoding scheme.

DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

Hereinafter, an apparatus and method for encoding and decoding a three-dimensional (3D) video based on depth transition data according to example embodiments will be described with reference to the accompanying drawings.

A depth image based rendering (DIBR) system may render a view between available reference views. To enhance the quality of the rendered view, a depth map may be provided together with a reference video.

The reference video and the depth map may be compressed and be coded into a bitstream. A distortion occurring in coding the depth map may cause relatively significant quality degradation, particularly, due to erosion artifacts along a foreground obj ect boundary. Accordingly, proposed is an approach that may decrease erosion artifacts by providing additional information for each intermediate rendered view.

For example, an encoder may synthesize views and may transmit a residue between the synthesized view and an original captured video. This scheme may be unattractive since overhead increases based on a desired number of possible interpolated views.

Accordingly, embodiments may provide auxiliary data that may complement depth information and may provide enhanced rendering of multiple intermediate views.

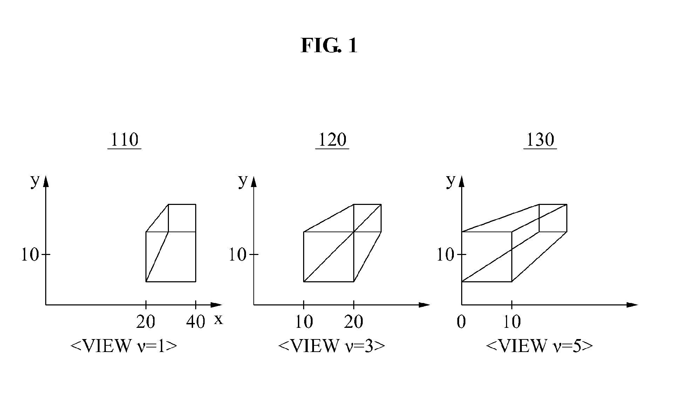

FIG. 1 illustrates coordinates based on each view of a cube object.

Referring to FIG. 1, a first view 110, a second view 120, and a third view 130 correspond to examples of coordinates of the same cube captured at horizontally different camera views v = 1, v = 3, and v = 5. According to an increase in a view index, the cube object moves left in an image frame.

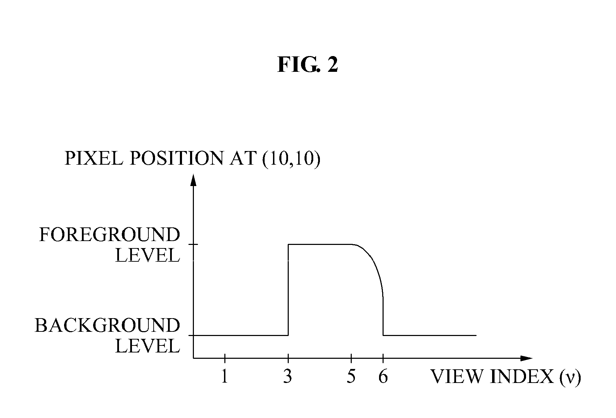

FIG. 2 illustrates depth transition data using the cube object of FIG. 1.

Referring to FIG. 2, when a pixel position = (10, 10), it can be verified that a depth transition from a foreground to a background or a depth transition from the background to the foreground is performed based on a foreground level and a background level according to a view index v. For a given pixel position, it is possible to generate depth transition data by tracing a depth value for a pixel using a function of selecting an intermediate camera position. Compared to conventional depth map data that is separately provided for every reference view, once depth transition data proposed according to an embodiment is generated, a single data set may be used to enhance rendering at any arbitrary view position. According to an embodiment, the enhanced efficiency may be achieved according to a decoder capability of rendering close position from a position of the reference view.

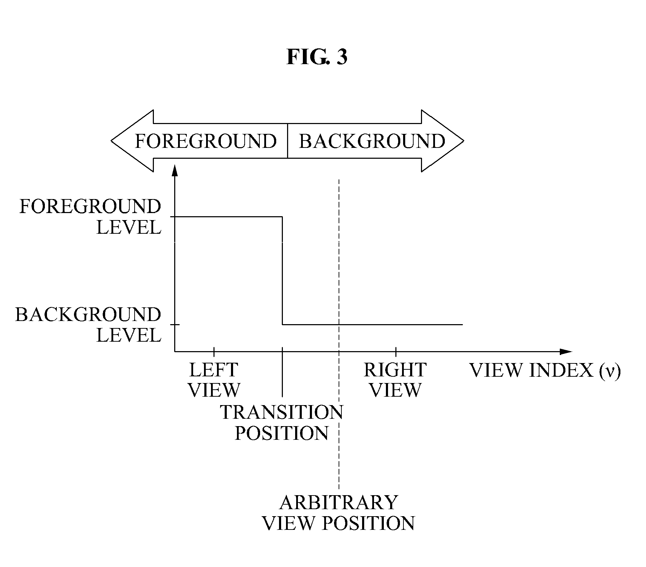

FIG. 3 illustrates depth transition data indicating a foreground-to-background transition.

Referring to FIG. 3, depth transition data for arbitrary view rendering may be used to verify a foreground level and a background level according to each left or right view index at an arbitrary view position, and to thereby verify a transition position where a transition from the foreground level to the background level or a transition from the background level to the foreground level occurs. For example, a pixel position may belong to a foreground in a left reference view and may belong to a background in a right reference view. The depth transition data may be generated by recording a transition position for each pixel position. When the arbitrary view is positioned at the left of the transition position, a corresponding pixel may belong to the foreground. When the arbitrary view is positioned to the right of the transition position, the corresponding pixel may belong to the background. Accordingly, the foreground and background map may be used to generate the arbitrary view position based on the depth transition data. When depth maps for intermediate views are used to generate the depth transition data based on a reference depth map value, a binary map using the same equation applied to the reference views may be generated. In this example, a transition may be easily traced. However, the depth maps may not be available at all times for a target view at the arbitrary view position. Accordingly, a method of estimating a camera position where a depth transition occurs based on camera parameters may be derived.

The depth transition data may have camera parameters as shown in Table 1.

[Table 1]

| Symbol | Explanation |
|---|---|
| $(x, y, z)$ | camera coordinates |
| $(x', y', z')$ | |
| $(X, Y, Z)$ | World coordinates |
| $(x_{im}, y_{im})$ | image coordinates |
| $(x'_{im}, y'_{im})$ | |
| A | intrinsic camera matrix |
| M | extrinsic camera matrix |
| R | rotation matrix |
| T | translation vector |
| $p, p'$ | view index |
| $Z_p(x_{im}, y_{im})$ | depth value at $(x_{im}, y_{im})$ in p-th view |
| $L_p(x_{im}, y_{im})$ | depth map value at $(x_{im}, y_{im})$ in p-th view |
| $Z_{near}$ | the nearest depth in the scene |
| $Z_{jar}$ | the farthest depth value in the scene |
| $(O_x, O_y)$ | the coordinates in pixel of the image center (the principal point) |
| $f_x$ | focal length divided by the effective pixel size in horizontal direction |
| $f_y$ | focal length divided by the effective pixel size in vertical direction |
| $t_x$ | translation in horizontal direction |

Camera coordinates (x, y, z) may be mapped to world coordinates (X, Y, Z) according to Equation 1.

[Equation 1]

$$\begin{pmatrix} x \\ y \\ z \end{pmatrix} = \mathbf{AM} \begin{pmatrix} X \\ Y \\ Z \end{pmatrix}$$

In Equation 1, A denotes an intrinsic camera matrix and M denotes an extrinsic camera matrix. M may include a rotation matrix R and a translation vector T. Image coordinates $(x_{im}, y_{im})$ may be expressed according to Equation 2.

[Equation 2]

$$\begin{pmatrix} x_{im} \\ y_{im} \end{pmatrix} = \begin{pmatrix} \frac{x}{z} \\ \frac{y}{z} \end{pmatrix}$$

Accordingly, when each pixel depth value is known, a pixel position may be mapped to world coordinates and the pixel position may be remapped to another set of coordinates corresponding to a camera position of a view to be rendered. In particular, when a $p^{th}$ view having camera parameters Ap, Rp, and Tp is mapped to a $p'^{th}$ view having parameters $A_{p'}$, $R_{p'}$, and $T_{p'}$, camera coordinates in the $p'^{th}$ view may be represented according to Equation 3.

[Equation 3]

$$\begin{pmatrix} x' \\ y' \\ z' \end{pmatrix} = \mathbf{A}_{p'}\mathbf{R}_{p'} \left\{ \mathbf{R}_p^{-1}\mathbf{A}_p^{-1} \begin{pmatrix} x_{im} \\ y_{im} \\ 1 \end{pmatrix} Z_p\left(x_{im}, y_{im}\right) + \mathbf{T}_p - \mathbf{T}_{p'} \right\},$$

In Equation 3, Z denotes a depth value and image coordinates in the $p'^{th}$ view may be expressed according to Equation 4.

[Equation 4]

$$\begin{pmatrix} x'_{im} \\ y'_{im} \\ 1 \end{pmatrix} = \begin{pmatrix} \frac{x'}{z'} \\ \frac{y'}{z'} \\ \frac{z'}{z'} \end{pmatrix} = \mathbf{A}_{p'}\mathbf{R}_{p'}\mathbf{R}_p^{-1}\mathbf{A}_p^{-1} \begin{pmatrix} x_{im} \\ y_{im} \\ 1 \end{pmatrix} + \frac{1}{Z_p\left(x_{im}, y_{im}\right)}\mathbf{A}_{p'}\mathbf{R}_{p'}\left\{\mathbf{T}_p - \mathbf{T}_{p'}\right\}.$$

Hereinafter, a method of calculating a camera position based on a previous derivation of point mapping when a depth transition occurs will be described. It is assumed that cameras are arranged in a horizontally parallel position, which implies an identify matrix. To calculate Ap'A⁻¹p, the intrinsic matrix A may be defined according to Equation 5.

[Equation 5]

$$\mathbf{A} = \begin{pmatrix} f_x & 0 & o_x \\ 0 & f_y & o_y \\ 0 & 0 & 1 \end{pmatrix},$$

In Equation 5, $f_x$ and $f_y$ respectively denote focal lengths divided by an effective pixel size in a horizontal direction and a vertical direction. $(o_x, o_y)$ denotes pixel coordinates of an image center that is a principal point. An inverse matrix of the intrinsic matrix A may be calculated according to Equation 6.

[Equation 6]

$$\mathbf{A}^{-1} = \begin{pmatrix} 1/f_x & 0 & -o_x/f_x \\ 0 & 1/f_y & -o_y/f_y \\ 0 & 0 & 1 \end{pmatrix}.$$

When the same focal length for two cameras at the $p^{th}$ view and the $p'^{th}$ view is assumed, Equation 4 may be expressed according to Equation 7.

[Equation 7]

$$\begin{pmatrix} x'_{im} \\ y'_{im} \\ 1 \end{pmatrix} = \begin{pmatrix} \frac{x'}{z'} \\ \frac{y'}{z'} \\ \frac{z'}{z'} \end{pmatrix} = \mathbf{A}_{p'}\mathbf{A}_p^{-1} \begin{pmatrix} x_{im} \\ y_{im} \\ 1 \end{pmatrix} + \frac{1}{Z_p(x_{im}, y_{im})} \mathbf{A}_{p'} \{ \mathbf{T}_p - \mathbf{T}_{p'} \}$$

$$= \begin{pmatrix} x_{im} + o_{x,p} - o_{x,p'} \\ y_{im} + o_{y,p} - o_{y,p'} \\ 1 \end{pmatrix} + \frac{1}{Z_p(x_{im}, y_{im})} \mathbf{A}_{p'} \{ \mathbf{T}_p - \mathbf{T}_{p'} \}.$$

With the assumption of parallel camera setting, there will be no disparity change other than in a horizontal direction or an x direction. Accordingly, disparity $\Delta_{im}$ may be expressed according to Equation 8.

[Equation 8]

$$\Delta x_{im} = x'_{im} - x_{im} = o_{x,p} - o_{x,p'} + \frac{1}{Z_p(x_{im}, y_{im})} \cdot f_x \cdot t_x,$$

In Equation 8, $t_x$ denotes a camera distance in the horizontal direction.
The relationship between an actual depth value and an 8-bit depth map may be expressed according to Equation 9.

[Equation 9]

$$L(x, y) = \frac{\frac{1}{Z(x,y)} - \frac{1}{Z_{far}}}{\frac{1}{Z_{near}} - \frac{1}{Z_{far}}} \times 255,$$

In Equation 9, $Z_{near}$ denotes a nearest depth value in a scene and $Z_{far}$ denotes a farthest depth value in the scene. In a depth map L, $Z_{near}$ corresponds to a value 255 and $Z_{far}$ corresponds to a value 0. When substituting Equation 8 with the above values, Equation 10 may be obtained.

[Equation 10]

$$\Delta x_{im} = x'_{im} - x_{im} = o_{x,p} - o_{x,p'} + \left( \frac{L_p\left(x_{im}, y_{im}\right)}{255} \cdot \left( \frac{1}{Z_{near}} - \frac{1}{Z_{far}} \right) + \frac{1}{Z_{far}} \right) \cdot f_x \cdot t_x.$$

Accordingly, when the camera distance $t_x$ is known, the disparity $\Delta x_{im}$ may be calculated. When the disparity $\Delta x_{im}$ is known, the camera distance $t_x$ may be calculated. Accordingly, when the disparity is used as the horizontal distance from a given pixel position to a position where a depth transition occurs, it is possible to find the exact view position where the depth transition occurs. The horizontal distance may be measured by counting a number of pixels from a given pixel to a first pixel for which a depth map value difference with respect to an original pixel exceeds a predetermined threshold. Using the above calculated horizontal distance as the disparity $\Delta x_{im}$, the view position where the depth transition occurs may be estimated according to Equation 11.

[Equation 11]

$$t_x = \frac{\Delta x_{im} + o_{x,p'} - o_{x,p}}{f_x} \cdot \frac{255}{a \cdot L_p\left(x_{im}, y_{im}\right) + b},$$

In Equation 11, $a = \frac{1}{Z_{near}} - \frac{1}{Z_{far}}$, $b = \frac{1}{Z_{far}}$ may be quantized to a desired precision and be transmitted as auxiliary data.

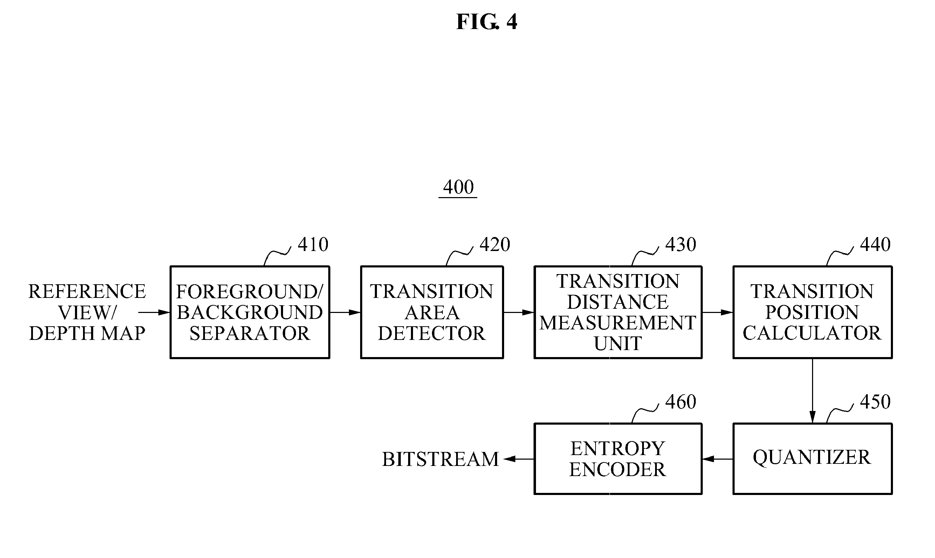

FIG. 4 illustrates a configuration of a 3D video encoder 400 using depth transition data according to example embodiments.

Referring to FIG. 4, the 3D video encoder 400 using the depth transition data may include a foreground and background separator 410, a transition area detector 420, a transition distance measurement unit 430, a transition position calculator 440, a quantizer 450, and an entropy encoder 460.

The foreground and background separator 410 may receive a reference video and a depth map and may separate a foreground and a background in the reference video and the depth map. That is, the foreground and background separator 410 may separate the foreground and the background based on depth values of foreground objects and background objects in the reference video. For example, the foreground and background separator 410 may separate the foreground and the background in the reference video and the depth map based on the foreground level or the background level as shown in FIG. 2 and FIG. 3. As one example, when reference video and depth map data corresponds to the foreground level, the reference video and depth map data may be separated as the foreground. When the reference video and depth map data corresponds to the background level, the reference video and depth map data may be separated as the background.

The transition area detector 420 may receive, from the foreground and background separator 410, data in which the foreground and the background are separated, and may detect a transition area based on the received data. The transition area detector 420 may detect, as the transition area based on the data, an area where a foreground-to-background transition or a background-to-foreground transition occurs. As one example, when the view index v = 3 as shown in FIG. 2, the transition area detector 420 may detect the transition area where the transition from the background level to the foreground level occurs. As another example, when the view index v = 6 as shown in FIG. 2, the transition area detector 420 may detect the transition area where the transition from the foreground level to the background level occurs.

The foreground and background separator 410 may separate the foreground and the background based on a global motion of background objects and a local motion of foreground objects in the reference video.

The foreground and background separator 410 may separate the foreground and the background based on an edge structure in the reference video.

The transition distance measurement unit 430 may measure a distance between transition areas. Specifically, the transition distance measurement unit 430 may measure a transition distance based on the detected transition area. For example, the transition distance measurement unit 430 may measure a transition distance from a given pixel position to a pixel position where a foreground-to-background transition or a background-to-foreground transition occurs.

The transition position calculator 440 may calculate a depth transition for each pixel position according to a view change. That is, the transition position calculator 440 may calculate depth transition data based on a view transition position where a foreground-to-background transition or a background-to-foreground transition occurs. For example, the transition position calculator 440 may calculate depth transition data based on pixel positions where the foreground-to-background transition or the background-to-foreground transition occurs between neighboring reference views.

The transition position calculator 440 may calculate the depth transition data by measuring the transition distance from the given pixel position to the pixel position where the foreground-to-background transition or the background-to-foreground transition occurs.

The transition position calculator 440 may calculate the depth transition data using intrinsic camera parameters or extrinsic camera parameters.

The quantizer 450 may quantize a position of the calculated depth transition. The quantizer 450 may perform quantization based on a rendering precision of a 3D video decoding system.

The entropy encoder 460 may perform entropy encoding of the quantized position of the depth transition.

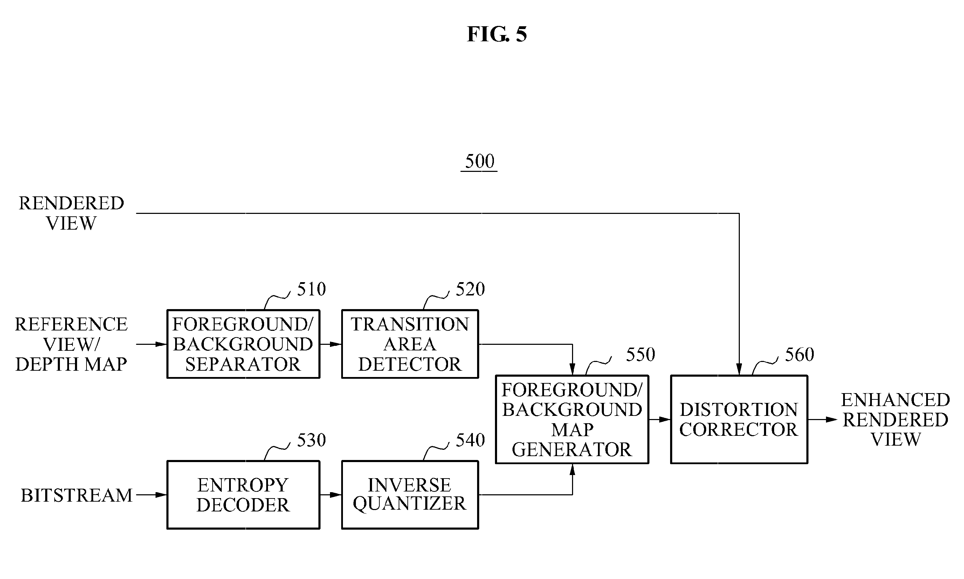

FIG. 5 illustrates a configuration of a 3D video decoder 500 using depth transition data according to example embodiments.

Referring to FIG. 5, the 3D video decoder 500 using the depth transition data may include a foreground and background separator 510, a transition area detector 520, an entropy decoder 530, an inverse quantizer 540, a foreground and background map generator 550, and a distortion corrector 560.

The foreground and background separator 510 may separate a foreground and a background based on depth values of foreground objects and background objects in a reference video. The foreground and background separator 510 may receive reference video/depth map data and may separate the foreground and the background based on the depth values in the reference video/depth map data.

The foreground area detector 520 may calculate local averages of a foreground area and a background area by referring to a foreground and background map generated from the depth transition data, and may detect a transition area by comparing the calculated local averages.

The entropy decoder 530 may decode quantized depth transition data. That is, the entropy decoder 530 may receive a bitstream transmitted from the 3D video encoder 400, and may perform entropy decoding for a pixel position where a foreground-to-background transition or a background-to-foreground transition occurs using the received bitstream.

The inverse quantizer 540 may perform inverse quantization of the depth transition data. The inverse quantizer 540 may perform inverse quantization of the entropy decoded depth transition data.

The foreground and background map generator 550 may generate a foreground and background map based on the transition area detected by the transition area detector 8520 and the inverse quantized depth transition data output from the inverse quantizer 540.

The distortion corrector 560 may correct a distortion by expanding a rendered view based on the inverse quantized depth transition data. That is, the distortion corrector 560 may correct the distortion by detecting pixels with a distortion greater than a predetermined reference value, based on the depth transition data. As one example, the distortion corrector 560 may replace the detected pixel value with the local average of the foreground area or the background area including a corresponding pixel, based on the depth transition data. As another example, the distortion corrector 560 may replace the detected pixel value with a nearest pixel value belonging to the same foreground area or background area, based on the depth transition data.

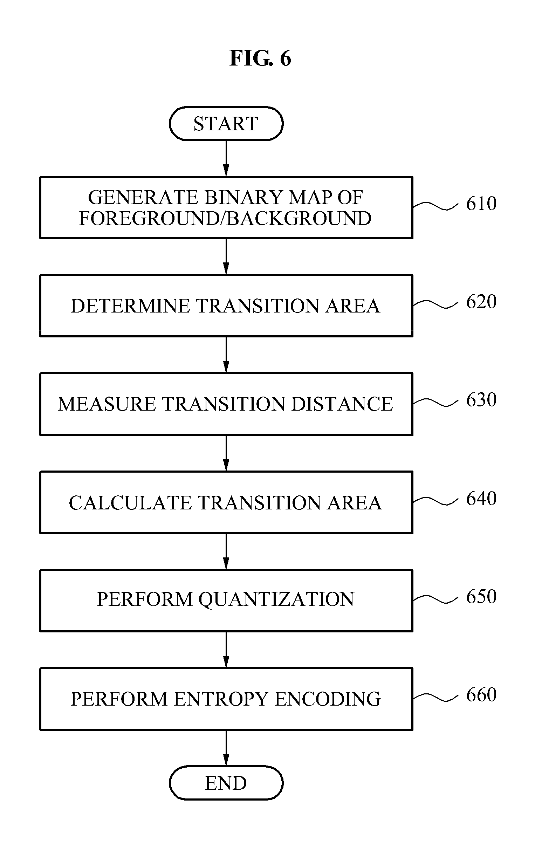

FIG. 6 illustrates a method of encoding a 3D video based on depth transition data according to example embodiments.

Referring to FIG. 4 and FIG. 6, in operation 610, the 3D video encoder 400 may generate a binary map of a foreground and a background. That is, in operation 610, the 3D video encoder 400 may separate the foreground and the background in a reference video using the foreground and background separator 410, and may generate the binary map.

In operation 620, the 3D video encoder 400 may determine a foreground area. That is, in operation 620, the 3D video encoder 400 may determine the foreground area by calculating a depth transition for each pixel position according to a view change. For example, the 3D video encoder 400 may determine the foreground area and the background area by comparing foreground and background maps of neighboring reference views using the transition area detector 420. When the pixel position belongs to the foreground in the reference view and belongs to the background in another reference view or vice versa, the 3D video encoder 400 may determine the pixel position as the transition area. For the transition area, a depth transition area may be calculated and a view position may be transited.

In operation 630, the 3D video encoder 400 may measure a transition distance. That is, in operation 630, the 3D video encoder 400 may measure, as the transition distance, a distance from a current pixel position to a transition position in a current reference view using the transition distance measurement unit 430. For example, in a 1D parallel camera model, the transition distance may be measured by counting a number of pixels from a given pixel to a first pixel for which a depth map value difference with respect to an original pixel exceeds a predetermined threshold.

In operation 640, the 3D video encoder 400 may calculate a transition area. That is, the 3D video encoder 400 may calculate depth transition data based on a view transition position where a foreground-to-background transition or a background-to-foreground transition occurs. For example, in operation 640, the 3D video encoder 400 may calculate the transition view position according to Equation 11 using the transition position calculator 440.

In operation 650, the 3D video encoder 440 may quantize a position of the calculated depth transition. That is, in operation 650, the 3D video encoder 400 may obtain a position value that is quantized with a desired precision enough to support a minimum spacing between interpolated views using the quantizer 450. The interpolated views may be generated at the 3D video decoder 500.

In operation 660, the 3D video encoder 400 may encode the quantized depth transition position. For example, in operation 660, the 3D video encoder 400 may perform entropy encoding of the quantized depth transition position. The 3D video encoder 400 may compress and encode data to a bitstream, and transmit the bitstream to the 3D video decoder 500.

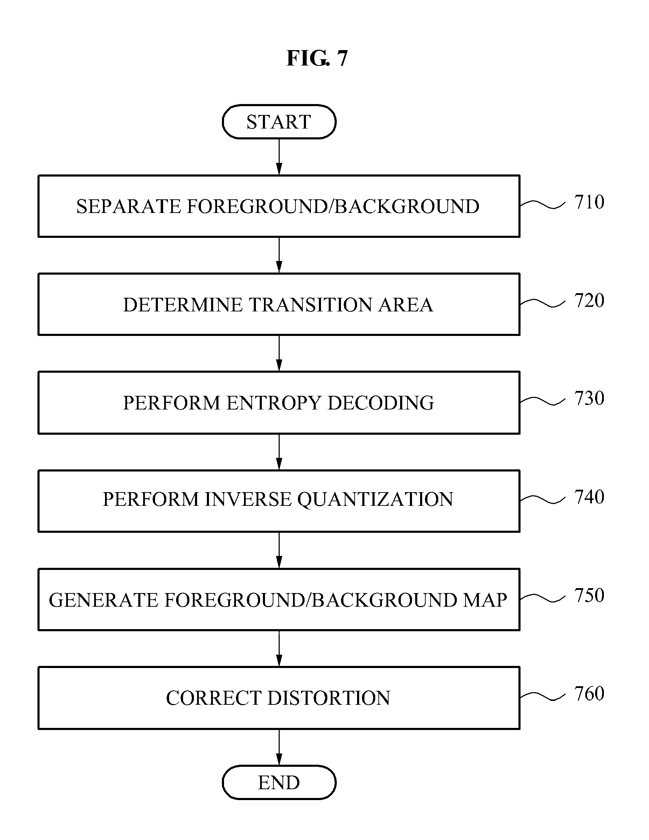

FIG. 7 illustrates a method of decoding a 3D video based on depth transition data according to example embodiments.

Referring to FIG. 5 and FIG. 7, in operation 710, the 3D video decoder 500 may separate a foreground and a background. That is, in operation 710, the 3D video decoder 500 may separate the foreground and the background in a reference video/depth map using the foreground and background separator 510.

In operation 720, the 3D video decoder 500 may determine a transition area. That is, in operation 720, the 3D video decoder 500 may determine an area where a transition between the foreground and the background occurs, based on data in which the foreground and the background is separated using the transition area detector 520, which is the same as the 3D video encoder 400.

In operation 730, the 3D video decoder 500 may perform entropy decoding of a bitstream transmitted from the 3D video encoder 400. That is, in operation 730, the 3D video decoder 500 may perform entropy decoding of depth transition data included in the bitstream using the entropy decoder 530. For example, the 3D video decoder 500 may perform entropy decoding for a pixel position where the foreground-to-background transition or the background-to-foreground transition occurs, based on the depth transition data included in the bitstream.

In operation 740, the 3D video decoder 500 may perform inverse quantization of the decoded depth transition data. That is, in operation 740, the 3D video decoder 500 may perform inverse quantization of a view transition position value using the inverse quantizer 540.

In operation 750, the 3D video decoder 500 may generate a foreground/background map. That is, in operation 750, the 3D video decoder 500 may generate the foreground/background map for a target view using the foreground and background map generator 550. When no transition occurs between neighboring reference views, the map may include a value of reference views. When the transition occurs, the inverse quantized transition position value may be used to determine whether a given position in the target view belongs to the foreground or the background.

In operation 760, the 3D video decoder 500 may correct a distortion with respect to a synthesized image based on the decoded depth transition data. That is, in operation 760, when a distortion such as an erosion artifact occurs in a rendered view compared to the foreground/background map, the 3D video decoder 500 may output an enhanced rendered view by correcting the distortion with respect to the synthesized image. For example, the 3D video decoder 500 may perform erosion correction for a local area where the foreground/background map for the target view is given, based on the depth transition data using the distortion corrector 560.

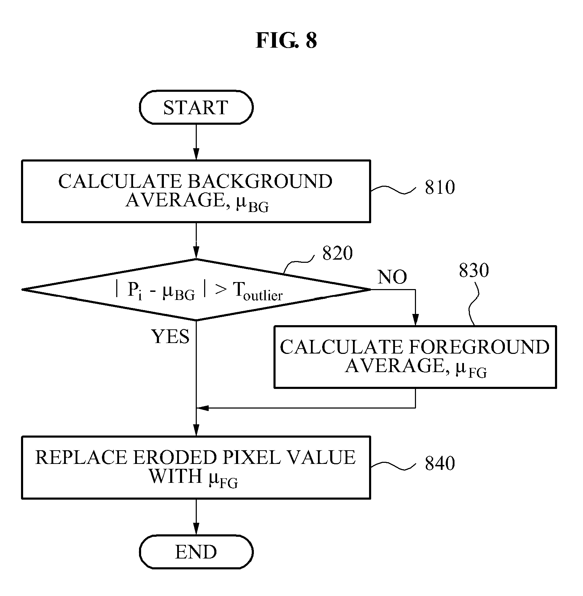

FIG. 8 illustrates a distortion correction procedure using depth transition data according to example embodiments.

Referring to FIG. 8, in operation 810, the 3D video decoder 500 may calculate a background average $\mu_{BG}$ when an erosion distortion occurs in a synthesized image.

In operation 820, the 3D video decoder 500 may classify an outlier or an eroded pixel by comparing each foreground pixel and the background average. When a pixel is close to the background average, foreground pixels without outliers may be used.

In operation 830, the 3D video decoder 500 may calculate a foreground average $\mu_{FG}$.

In operation 840, the 3D video decoder 500 may replace the eroded pixel value with the calculated foreground average $\mu_{FG}$. That is, the 3D video decoder 500 may replace an eroded pixel with the foreground average.

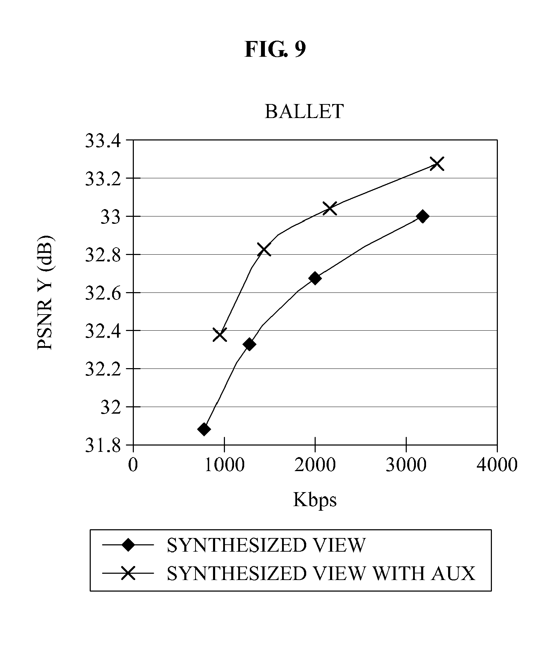

FIG. 9 illustrates a graph showing an example of a distortion rate curve comparing a depth transition data scheme according to example embodiments and a conventional encoding scheme.

Referring to FIG. 9, a synthesized view using depth transition data according to example embodiments may have an enhanced distortion factor, for example, a klirr factor compared to a conventional synthesized view.

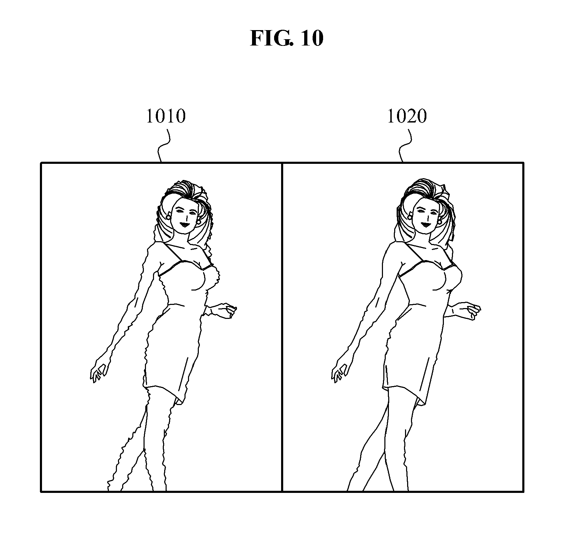

FIG. 10 illustrates a graph showing an example of a quality comparison between a depth transition data scheme according to example embodiments and a conventional encoding scheme.

Referring to FIG. 10, comparing an image 1010 where an erosion artifact according to the convention encoding scheme occurs with an image 1020 where the erosion artifact is corrected according to the example embodiments, it can be verified that the edge distortion is significantly enhanced compared to the conventional encoding scheme.

The above-described embodiments may be recorded in non-transitory computer-readable media including program instructions to implement various operations embodied by a computer. The media may also include, alone or in combination with the program instructions, data files, data structures, and the like. The described hardware devices may be configured to act as one or more software modules in order to perform the operations of the above-described embodiments, or vice versa.

Although embodiments have been shown and described, it would be appreciated by those skilled in the art that changes may be made in these embodiments without departing from the principles and spirit of the disclosure, the scope of which is defined by the claims and their equivalents.

**Claims**

1. An apparatus for encoding a three-dimensional (3D) video, comprising:

   a transition position calculator to calculate a depth transition for each pixel position according to a view change;
   a quantizer to quantize a position of the calculated depth transition; and
   an encoder to encode the quantized position of the depth transition.

2. The apparatus of claim 1, wherein the transition position calculator calculates depth transition data based on a view transition position where a foreground-to-background transition or a background-to-foreground transition occurs.

3. The apparatus of claim 1, wherein the transition position calculator calculates depth transition data based on pixel positions where a foreground-to-background transition or a background-to-foreground transition occurs between neighboring reference views.

4. The apparatus of claim 3, further comprising:

   a foreground and background separator to separate a foreground and a background based on depth values of foreground objects and background objects in a reference video.

5. The apparatus of claim 4, wherein the foreground and background separator separates the foreground and the background based on a global motion of the background objects and a local motion of the foreground objects in the reference video.

6. The apparatus of claim 4, wherein the foreground and background separator separates the foreground and the background based on an edge structure in the reference video.

7. The apparatus of claim 1, wherein the transition position calculator calculates depth transition data by measuring a transition distance from a given pixel position to a pixel position where a foreground-to-background transition or a background-to-foreground transition occurs.

8. The apparatus of claim 1, wherein the transition position calculator calculates depth transition data based on intrinsic camera parameters or extrinsic camera parameters.

9. The apparatus of claim 1, wherein the quantizer performs quantization based on a rendering precision of a 3D video decoding system.

10. An apparatus for decoding a three-dimensional (3D) video, comprising:

    a decoder to decode quantized depth transition data;
    an inverse quantizer to perform inverse-quantization of the depth transition data; and
    a distortion corrector to correct a distortion with respect to a synthesized image based on the decoded depth transition data.

11. The apparatus of claim 10, wherein the decoder performs entropy decoding for a pixel position where a foreground-to-background transition or a background-to-foreground transition occurs.

**12.** The apparatus of claim 11, further comprising:

a foreground and background separator to separate a foreground and a background based on depth values of foreground objects and background objects in a reference video.

**13.** The apparatus of claim 10, wherein the distortion corrector corrects a distortion by detecting pixels with the distortion greater than a reference value based on the depth transition data.

**14.** The apparatus of claim 13, further comprising:

a foreground area detector to calculate local averages of a foreground area and a background area based on a foreground and background map generated from the depth transition data, and to detect a pixel value through a comparison between the calculated local averages.

**15.** The apparatus of claim 13, wherein the distortion corrector replaces the detected pixel value with the local average of the foreground area or the background including a corresponding pixel based on the depth transition data.

**16.** The apparatus of claim 13, wherein the distortion corrector replaces the detected pixel value with a nearest pixel value belonging to the same foreground area or to the background area based on the depth transition data.

**17.** A method of encoding a three-dimensional (3D) video, comprising:

calculating a depth transition for each pixel position according to a view change;
quantizing a position of the calculated depth transition; and
encoding the quantized position of the depth transition.

**18.** The method of claim 17, wherein the calculating comprises calculating depth transition data based on a view transition position where a foreground-to-background transition or a background-to-foreground transition occurs.

**19.** A method of decoding a three-dimensional (3D) video, comprising:

decoding quantized depth transition data;
performing inverse quantization of the depth transition data; and
enhancing a quality of an image generated based on the decoded depth transition data.

**20.** The method of claim 19, wherein the decoding comprises performing entropy decoding for a pixel position where a foreground-to-background transition or a background-to-foreground transition occurs.

## FIG. 1

110

120

130

y

10

20    40  x

<VIEW v=1>

y

10

10    20

<VIEW v=3>

y

10

0    10

<VIEW v=5>

**FIG. 2**

PIXEL POSITION AT (10,10)

FOREGROUND
LEVEL

BACKGROUND
LEVEL

1    3    5  6    VIEW INDEX ($v$)

# FIG. 3

**FIG. 4**

**FIG. 5**

500

EP 2 582 135 A2

RENDERED
VIEW

REFERENCE
VIEW/
DEPTH MAP → | FOREGROUND/ BACKGROUND SEPARATOR | 510 → | TRANSITION AREA DETECTOR | 520

BITSTREAM → | ENTROPY DECODER | 530 → | INVERSE QUANTIZER | 540

| FOREGROUND/ BACKGROUND MAP GENERATOR | 550 → | DISTORTION CORRECTOR | 560 → ENHANCED RENDERED VIEW

16

# FIG. 6

START

GENERATE BINARY MAP OF FOREGROUND/BACKGROUND — 610

DETERMINE TRANSITION AREA — 620

MEASURE TRANSITION DISTANCE — 630

CALCULATE TRANSITION AREA — 640

PERFORM QUANTIZATION — 650

PERFORM ENTROPY ENCODING — 660

END

## FIG. 7

START

SEPARATE FOREGROUND/BACKGROUND — 710

DETERMINE TRANSITION AREA — 720

PERFORM ENTROPY DECODING — 730

PERFORM INVERSE QUANTIZATION — 740

GENERATE FOREGROUND/BACKGROUND MAP — 750

CORRECT DISTORTION — 760

END

## FIG. 8

START

CALCULATE BACKGROUND AVERAGE, $\mu_{BG}$ — 810

$| P_i - \mu_{BG} | > T_{outlier}$ — 820

NO

YES

CALCULATE FOREGROUND AVERAGE, $\mu_{FG}$ — 830

REPLACE ERODED PIXEL VALUE WITH $\mu_{FG}$ — 840

END

# FIG. 9

BALLET

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61353821 B
- KR 1020100077249